# EUROPÄISCHE PATENTSCHRIFT

(11) **EP 0 728 824 B1**
(45) Veröffentlichungstag und Bekanntmachung des Hinweises auf die Patenterteilung: **23.08.2000**
(21) Anmeldenummer: 96101631.8
(22) Anmeldetag: 06.02.1996
(51) Int. Cl.: C09J 7/02, B60R 13/02

(54) **Selbsklebeband**
Self-adhesive tape
Ruban auto-adhésif

(30) Priorität: 23.02.1995 DE 19506250
(43) Veröffentlichungstag der Anmeldung: 28.08.1996
(73) Patentinhaber: Beiersdorf Aktiengesellschaft, 20245 Hamburg (DE)
(72) Erfinder: Schacht, Wolfgang, Dr., D-21629 Neu Wulmsdorf (DE); Gereke, Robert, Dr., D-38116 Braunschweig (DE); Henke, Frank, Dr., D-21629 Neu Wulmsdorf/Elsdorf (DE); Hoffmann, Holger, Dr., D-30900 Wedemark (DE)

(56) Entgegenhaltungen:
- WO-A-84/00130
- DE-A- 3 303 834
- US-A- 4 061 805

## Beschreibung

Die Erfindung beschreibt ein beidseitig klebendes Selbstklebeband, wie es insbesondere zur Erzielung von kältefesten Verklebungen eingesetzt wird.

Um hohe Festigkeiten gegenüber Abschälen und Scherkräften zu erreichen, ist der Einsatz unterschiedlicher Klebebänder bekannt.

In der DE-PS 21 05 877 wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt andererseits auch nur eine geringe Erholung, wenn es auf die Hälfte der ursprünglichen Dicke zusammengedrückt worden ist. Die Hohlräume in der Klebmasse bieten allerdings Ansätze für seitliches Eintreten von Lösungsmitteln und Wasser in die Klebfuge, was beispielsweise bei aufgeklebten Leisten im Automobilbau sehr unerwünscht ist. Weiterhin kann der vollständige Durchtritt von Lösungsmitteln oder Wasser durch das gesamte Klebeband nicht ausgeschlossen werden.

So beschreibt die DE-PS 28 21 606 ein druckempfindliches Klebeband mit einer Klebstoffschicht auf einem Trägermaterial, in der Glasmikrohohlkugeln mit einem Anteil von bis zu 60 Volumenprozent der Klebstoffschicht dispergiert sind. Dieses Klebeband bietet aufgrund seines Aufbaus eine gute Festigkeit gegenüber den oben genannten Belastungen. Denn das Band besitzt den technischen Vorteil, sich von Unebenheiten des Untergrundes kaum abzuheben, weil diesem die elastische Erholung fehlt, nachdem ein Druck eine Zeitlang auf dieses ausgeübt worden ist. Aber auch dies Klebeband ist mit einigen Nachteilen behaftet. So sind Glasmikrohohlkugeln sehr empfindliche Körper, die beim Einarbeiten in die Klebstoffschicht, beim Lagern, insbesondere aber beim Einsatz des Bandes zum Zerplatzen neigen, mit anschließenden Folgeproblemen aufgrund der entstehenden Splitter.

In der DE-OS 40 29 896 wird ein trägerloses, beidseitig klebendes Selbstklebeband aus einer druckempfindlichen Klebstoffschicht, die Glasmikrovollkugeln enthält, beschrieben. Das Klebeband weist zwar unbestritten gegenüber dem vorher erwähnten Klebeband die Eigenschaft auf, zu dauerhafteren Verbindungen zu führen, hat aber aufgrund der verwendeten Vollkugeln ein sehr hohes spezifisches Gewicht und ist in seiner Einsatzfähigkeit wegen der Glasmikrovollkugeln eingeschränkt.

Die WO 89/00106 offenbart ein Klebeband, das u.a. einen Träger aus einem vernetzten, "non-PSA" Polymer aufweist, der beidseitig mit einem Kleber beschichtet ist. Weiterhin kann der Träger zu einem hohen Volumenanteil leichte Mikrokügelchen und zu einem geringen Volumenanteil Mikrokügelchen mit einer höheren Dichte, die dann aber auch nur einen Durchmesser kleiner als 10 µm aufweisen sollen, enthalten.
Nicht erwähnt wird hingegen, daß zwischen Träger und Klebebeschichtung ein Haftvermittler vorhanden ist. Ein derartiger Haftvermittler ist aber bei hohen Beanspruchungen des Klebebands notwendig, um Delaminierungen zwischen Träger und Klebebeschichtung auszuschließen.

Allen genannten Klebebändern ist gemeinsam, daß die aufnehmbaren Scherkräfte, die auf die geklebte Verbindung einwirken, für viele Einsatzfälle nicht ausreichend sind, um eine dauerhafte Verbindung zwischen Untergrund und dem mittels des Klebebandes zu montierenden Gegenstandes zu gewährleisten. So ist insbesondere bei tieferen Temperaturen die Verwendung derartiger Klebebänder nur sehr eingeschränkt möglich, weil bei tiefen Temperaturen eine Versprödung des Trägers auftritt, so daß das Klebeband nicht mehr in der Lage ist, die gewünschte Verklebung aufrechtzuerhalten.

Der Erfindung liegt die Aufgabe zugrunde, ein Selbstklebeband zu schaffen, das die Nachteile des Standes der Technik nicht oder zumindest nicht in dem Umfang aufweist und das dennoch nicht in seiner Einsatzfähigkeit ähnlich den vorbekannten Produkten eingeschränkt ist.

Zur Lösung dieser Aufgabe schlägt die Erfindung ein druckempfindliches, beidseitig mit Klebemassen beschichtetes Selbstklebeband vor, das einen aus einem Allzweckkautschuk gefertigten Träger besitzt, der
a) beidseitig mit einer druckempfindlichen Klebemasse beschichtet ist, und der
b) Mikrovollkugeln aus Glas zu einem Volumenanteil von 10 Vol.-% bis 50 Vol.-%, insbesondere 10 Vol.-% bis 30 Vol.-%, enthält,
c) zur Verbesserung der Haftung der Klebmassen Haftvermittler aufweist,
wobei die Glasmikrovollkugeln einen Durchmesser von 10 µm bis 100 µm aufweisen und eine Dichte von 1,8 g/cm³ bis 6,0 g/cm³, insbesondere 1,9 g/cm³ bis 4,0 g/cm³, aufweisen.

Das Selbstklebeband zeigt hervorragende Eigenschaften, die derartig nicht vorherzusehen waren. Aufgrund der hohen Flexibilität des Trägers paßt sich das Klebeband sehr gut unebenem Untergrund an, wenn es mit einem gewissen Druck auf diesen gepreßt wird. Auf diese Weise entsteht eine sehr dauerhafte Verbindung zwischen Klebeband und Untergrund, die auch bei hohen Scherkräften, die auf das Selbstklebeband einwirken, nicht versagt. Wegen der fehlenden seitlich offenen Hohlräume im Träger wird auch das mögliche Eindrigen von Lösungsmitteln oder Wasser in das Klebeband mit all seinen bekannten Nachteilen verhindert. Aufgrund des sehr niedrigen Glaspunktes des Klebebandes gemäß Erfindung sind darüber hinaus Tieftemperatureinsätze bis -40°C möglich, weil die sonst zu beobachtende Versprödung bekannter Klebebänder nicht auftritt, so daß auch bei diesen extremen Temperaturen eine optimale Haftung des Klebebandes gewährleistet ist.

Eine solcher Tieftemperatureinsatz tritt beispielsweise bei der Montage von Zierleisten oder Spiegeln im Automobilbau auf, wenn das Fahrzeug in nördlicheren und kälteren Regionen der Erde gefahren wird.

Die Verwendung der Erfindung erfolgt neben der Automobilindustrie auch besonders in der Möbelindustrie, wo ebenfalls Spiegel, Leisten oder Blenden dauerhaft mit dem Untergrund zu verankern sind.

Wegen der hervorragenden Produkteigenschaften ist der Einsatz der Erfindung aber nicht auf die genannten Beispiele beschränkt. Vielmehr ist die Verwendung des Klebebandes in vielen Industriebereichen als Montagematerial möglich, wenn es gilt, auf einer relativ unebenen Oberfläche eine sichere Verbindung zwischen zwei Teilen unterschiedlichster Materialien zu schaffen.

Als Material für den Träger wird ein Allzweckkautschuk eingesetzt. Allzweckkautschuke sind dabei insbesondere entweder ein Natur-, Styrol-Butadien-, Butyl- oder Butadien-Kautschuk oder ein Blend mehrerer der genannten Kautschuke, bevorzugt wird aber ein Naturkautschuk. Um gewünschte Eigenschaften des Trägers gezielt einzustellen, kann gegebenenfalls die Verwendung von Füllstoffen erfolgen. So kann der Allzweckkautschuk mit Ruß aus der Reihe der verstärkenden, semiverstärkenden oder nicht verstärkenden Ruße insbesondere zwischen 0-80 phr, Zinkoxid insbesondere zwischen 0-70 phr und/oder anderen Füllstoffen wie Kieselsäure, Silikaten, Kreide oder Mikroglaskugeln versetzt werden. Neben den genannten ist auch die Verwendung weiterer Füllstoffe möglich. Weiterhin können auch Harze aus der Klasse der Phenol- und/oder Kohlenwasserstoffharze im Bereich insbesondere zwischen 0-75 phr zugesetzt werden. Zur Erhöhung der Standfestigkeit des Klebebandes kann dies mit üblichen Alterungsschutzmitteln, die je nach Anwendungsfall aus der Klasse der verfärbenden oder nicht verfärbenden Alterungsschutzmitteln stammen können, insbesondere im Bereich zwischen 0-10 phr, sowie bekannten Lichtschutzmitteln oder Ozonschutzmitteln gefüllt zwischen 0-10 phr, sowie bekannten Lichtschutzmitteln oder Ozonschutzmitteln gefüllt werden. Darüber hinaus ist eine Abmischung mit Vulkanisationsmitteln ( wie beispielsweise Schwefel, Schwefelspender, Beschleuniger oder Peroxiden ) und/oder der Zusatz von Fettsäure, insbesondere im Bereich von 0-10 phr, sowie die Verwendung von Weichmachern oder Beschleunigern möglich. Alle diese genannten Zusatzstoffe können je nach Einsatzzweck des Selbstklebebandes entweder allein oder in beliebiger Kombination miteinander zur Herstellung der Kautschukmischung eingesetzt werden, um eine optimale Abstimmung auf die Verwendung zu erhalten. Durch den Einsatz dieser Zusatzstoffe ist auch die Schwarzfärbung des Trägers, wie sie insbesondere von der Kraftfahrzeugindustrie gefordert wird, problemlos möglich.

Auf die bekannte Technologie der Allzweckkautschuk-Verarbeitung und den bekannten, dafür eingesetzten Additiven, etwa gemäß dem Buch von Werner Kleemann ( Werner Kleemann: "Mischungen für die Elastverarbeitung", Deutscher Verlag für Grundstoffindustrie, Leipzig 1982 ), wird ausdrücklich Bezug genommen.

Das Selbstklebeband zeigt durch die Verwendung von Mikrovollkugeln in der Kautschukträgerschicht verbesserte Eigenschaften, die auch für den Fachmann überraschend sind, insbesondere wenn die Mikrovollkugeln zu einem Volumenanteil von 10 Vol.-% bis 50 Vol.-%, ganz besonders 10 Vol.-% bis 30 Vol.-%, in der Trägerschicht enthalten sind.

Dabei finden als Mikrovollkugeln Glasmikrovollkugeln (Mikroglaskugeln) mit einem Durchmesser von 10 µm bis 100 µm, insbesondere 10 µm bis 60 µm, und einer Dichte von 1,8 g/cm³ bis 6,0 g/cm³, insbesondere 1,9 g/cm³ bis 4,0 g/cm³, Verwendung.

Die Anfertigung der Trägermischung findet vorzugsweise in einem für die Elastomer-Compoundierung typischen Innenmischer statt. Die Kautschukmischung wird dabei insbesondere auf einen Mooneywert ML₁₊₃ ( 100°C ) im Range von 40-80 eingestellt. Vorzugsweise erfolgt eine lösungsmittelfreie Verarbeitung. Die Kautschukmischung der Klebemasse ist ebenfalls je nach Einsatzzweck beliebig innerhalb des Bereiches von 10-250 g/m², vorzugsweise 40-150 g/m², wählbar.

### Beispiel (nicht erfindungsgemäß)

Die Herstellung der Trägermischung findet in einem für die Elastomer-Compoundierung typischen Innenmischer statt. Die Kautschukmischung wird dabei auf einen Mooneywert ML ₁₊₃ (100 °C) von 65 eingestellt.

Die Mischung setzt sich im einzelnen aus den folgenden Bestandteilen zusammen:

| Komponente | Anteil (phr) |
|---|---|
| Naturkautschuk SMR 10 | 100.0 |
| HAF Ruß | 25.0 |
| Zinkoxid | 8.0 |
| Phenolharz | 3.5 |
| Alterungsschutz Sontal | 1.8 |
| Schwefel | 0.9 |
| Beschleuniger (Sulfenamidtyp) | 0.9 |

Die Kautschukmischung wird anschließend auf einem handelsüblichem Elastomer-Kalander zu einer Gummibahn mit einer Dicke von 0,8 mm ausgezogen.

Die chemische Vernetzung des Trägers (= Schwefelvernetzung) erfolgt in einer für die Elastomerverarbeitung typischen Vulkanisationspresse bei einer Temperatur von 140 bis 160°C und einer Verweildauer von 5 bis 15 Minuten. Unmittelbar an die Vernetzung findet eine beidseitige intensive Coronabehandlung statt. Um ein Verblocken des Materials zu verhindern, wird beim Aufwickeln ein Vlies eingeschossen.

Der Träger hat nach der Vulkanisationshärtung eine Reißdehnung von < 700 % und eine Festigkeit von > 10 N/mm².

Anschließend wird das Material in zwei Schritten beidseitig mit je 60 g/m² der Polyacrylatmasse Duroctac 280 - 1753 der Fa. National Starch beschichtet. Die Beschichtung mit der Lösungsmittelmasse erfolgt nach einer erneuten in-line-Coronabehandlung direkt auf den Träger; es wird bei 100°C vernetzt und getrocknet.

Das einseitig mit Trennpapier abgedeckte doppelseitige Klebeband zeichnet sich durch hohe Klebkräfte bei gleichzeitiger hoher Scherfestigkeit aus und die damit erzeugten Verklebungen besitzen eine exzellente Kälteschlagfestigkeit.

## Patentansprüche

1. Druckempfindliches Selbstklebeband, dadurch gekennzeichnet, daß das Selbstklebeband eine Trägerschicht aus Kautschuken aufweist, die
a) beidseitig mit einer druckempfindlichen Klebemasse beschichtet ist, und die
b) Mikrovollkugeln aus Glas zu einem Volumenanteil von 10 Vol.-% bis 50 Vol.-%, insbesondere 10 Vol.-% bis 30 Vol.-%, enthält,
c) zur Verbesserung der Haftung der Klebmassen Haftvermittler aufweist,
wobei die Glasmikrovollkugeln einen Durchmesser von 10 µm bis 100 µm aufweisen und eine Dichte von 1,8 g/cm³ bis 6,0 g/cm³, insbesondere 1,9 g/cm³ bis 4,0 g/cm³, aufweisen.

2. Selbstklebeband nach Anspruch 1, dadurch gekennzeichnet, daß der Allzweckkautschuk ein Naturkautschuk, ein Styrol-Butadien-Kautschuk, ein Butylkautschuk, ein Butadien-Kautschuk oder ein Blend aus den genannten Kautschuken ist.

3. Selbstklebeband nach Anspruch 1, dadurch gekennzeichnet, daß der Allzweckkautschuk mit einem oder mehreren Additiven wie Alterungsschutzmitteln, Vernetzern, Lichtschutzmitteln, Ozonschutzmitteln, Fettsäuren, Harzen, Weichmachern und Vulkanisationsmitteln abgemischt ist.

4. Selbstklebeband nach Anspruch 1, dadurch gekennzeichnet, daß der Träger mit einem oder mehreren Füllstoffen wie Ruß, Zinkoxid, Kieselsäure, Silikaten und Kreide gefüllt ist.

5. Selbstklebeband nach Anspruch 1, dadurch gekennzeichnet, daß der Träger chemisch oder physikalisch vernetzt ist.

6. Selbstklebeband nach Anspruch 1, dadurch gekennzeichnet, daß der Träger eine Dicke von 400 µm bis 5000 µm, insbesondere 600 µm bis 2000 µm, aufweist.

7. Verwendung eines Selbstklebebandes nach Ansprüchen 1 bis 6 zur Erzielung von dauerhaften Verklebungen mit hoher Scherfestigkeit, hoher Klebkraft und hoher Kälteschlagfestigkeit.

8. Verwendung eines Selbstklebebandes nach Ansprüchen 1 bis 6 als Montagematerial zur Befestigung von Kraftfahrzeugspiegeln und -leisten, Emblemen, Schildern, Haken, Haltern, Verkleidungen, Blenden, Leisten.

## Claims

1. Pressure-sensitive self-adhesive tape, characterized in that the self-adhesive tape has a backing layer made from rubbers which
a) is coated on both sides with a pressure-sensitive adhesive composition, and
b) contains solid glass microspheres to a volume extent of from 10% by volume to 50% by volume, in particular from 10% by volume to 30% by volume, and
c) has adhesion promoters in order to improve the adhesion of the adhesive compositions,
the solid glass microspheres having a diameter of from 10 µm to 100 µm and a density of from 1.8 g/cm³ to 6.0 g/cm³, in particular from 1.9 g/cm³ to 4.0 g/cm³.

2. Self-adhesive tape according to Claim 1, characterized in that the general purpose rubber is a natural rubber, a styrene-butadiene rubber, a butyl rubber, a butadiene rubber or a blend of these rubbers.

3. Self-adhesive tape according to Claim 1, characterized in that the general purpose rubber is blended with one or more additives such as ageing inhibitors, crosslinking agents, light stabilizers, ozone protection agents, fatty acids, resins, plasticizers and vulcanizing agents.

4. Self-adhesive tape according to Claim 1, characterized in that the backing is filled with one or more fillers such as carbon black, zinc oxide, silica, silicates and chalk.

5. Self-adhesive tape according to Claim 1, characterized in that the backing is chemically or physically crosslinked.

6. Self-adhesive tape according to Claim 1, characterized in that the backing has a thickness of 400 µm to 5000 µm, in particular from 600 µm to 2000 µm.

7. Use of a self-adhesive tape according to Claims 1 to 6 for obtaining permanent adhesive bonds having high shear strength, high adhesion and good low-temperature impact strength.

8. Use of a self-adhesive tape according to Claims 1 to 6 as assembly material for fastening automotive mirrors and trim strips, emblems, signs, hooks, holders, panels, coverings, trimmings.

## Revendications

1. Ruban auto-adhésif sensible à la pression, caractérisé en ce que le ruban auto-adhésif présente une couche de support en caoutchouc,
a) qui est revêtue des deux côtés d'une masse adhésive sensible à la pression, et
b) qui contient des microbilles pleines en verre jusqu'à une proportion volumique de 10 % en volume à 50 % en volume, en particulier de 10 % en volume à 30 % en volume,
c) qui présente, en vue de l'amélioration de l'adhérence de la masse adhésive, des promoteurs d'adhésion,
les microbilles pleines en verre présentant un diamètre de 10 microns à 100 microns et une densité de 1,8 g/cm³ à 6,0 g/cm³, en particulier de 1,9 g/cm³ à 4,0 g/cm³.

2. Ruban auto-adhésif selon la revendication 1, caractérisé en ce que le caoutchouc polyvalent est un caoutchouc naturel, un caoutchouc styrène butadiène, un caoutchouc butyle, un caoutchouc butadiène ou un mélange des caoutchoucs cités.

3. Ruban auto-adhésif selon la revendication 1, caractérisé en ce que le caoutchouc polyvalent est mélangé à un ou plusieurs additifs, comme des agents de protection contre le vieillissement, des agents de réticulation, des agents de protection contre la lumière, des agents de protection contre l'ozone, des acides gras, des résines, des plastifiants et des agents de vulcanisation.

4. Ruban auto-adhésif selon la revendication 1, caractérisé en ce que le support est rempli d'une ou de plusieurs charges comme le noir de fumée, l'oxyde de zinc, l'acide silicique, des silicates ou de la craie.

5. Ruban auto-adhésif selon la revendication 1, caractérisé en ce que le support est réticulé par voie chimique ou par voie physique.

6. Ruban auto-adhésif selon la revendication 1, caractérisé en ce que le support présente une épaisseur de 400 microns à 5000 microns, en particulier de 600 microns à 2000 microns.

7. Utilisation d'un ruban auto-adhésif selon les revendications 1 à 6, en vue de l'obtention de collages durables ayant une résistance élevée au cisaillement, un pouvoir adhésif élevé et une résistance au froid élevée.

8. Utilisation d'un ruban auto-adhésif selon les revendications 1 à 6, en tant que matériau de montage pour la fixation de miroirs et de garnitures de véhicules, d'emblèmes, de plaques, de crochets, de supports, de garnitures, de panneaux, de bordures.
